# EUROPEAN PATENT APPLICATION

(11) **EP 4 005 854 A1**
(43) Date of publication of application: **01.06.2022**
(21) Application number: 20210221.6
(22) Date of filing: 27.11.2020
(51) Int. Cl.: B60L 53/10, B60L 53/124, B60L 53/30

(54) **A CONTROL UNIT FOR CONTROLLING AN ELECTRIC VEHICLE WITH ACTION PLAN WHEN CHARGING FAULT OCCURS**

(71) Applicant: VOLVO TRUCK CORPORATION, 405 08 Göteborg (SE)
(72) Inventor: WEDDING, Christoffer, 416 72 Göteborg (SE); SANDGREN, Victor, 416 78 Göteborg (SE); HU, Siyuan, 417 08 Göteborg (SE); RUNDSTRÖM, Håkan, 459 91 Ljungskile (SE)
(74) Representative: Valea AB

(57) **Abstract**

The invention relates to a control unit (400) and a method for controlling an electric vehicle (100) comprising a rechargeable electric energy storage system (101), the control unit comprising means for receiving information from a charging station (200) configured for charging of the electric energy storage system. The control unit is configured to:
- receive information relating to an operational fault of the charging station,
- based on the received information relating to the operational fault, determine an action suitable to be performed by the vehicle.

Also, information relating to an amount of energy presently stored in the electric energy storage system, and/or information relating to an estimated energy need of the vehicle for taking at least one proposed action may be taken into account.

## Description

### TECHNICAL FIELD

The invention relates to a control unit for controlling an electric vehicle in connection with charging. The invention also relates to a computer-implemented method for determining an action suitable to be performed by an electric vehicle located at a charging station, a computer program, a computer readable medium, and an electric vehicle.

The invention can be applied in heavy-duty electric vehicles, such as trucks, buses and construction equipment. Although the invention will be described with respect to an electric bus, the invention is not restricted to this particular vehicle, but may also be used in other vehicles, such as passenger cars. The invention may be applied in fully electric vehicles and in hybrid vehicles provided with an internal combustion engine in addition to a rechargeable electric energy storage system, chargeable by an external power source.

### BACKGROUND

Electric vehicles provided with on-board rechargeable electric energy storage systems (ESS's) rely on electric vehicle charging stations for regular charging of the ESS's. Such a charging station for electric vehicles may also be referred to as an electric vehicle supply equipment (EVSE), or an electric recharging point. There exists a variety of different types of charging stations for either alternating current (AC) or direct current (DC) charging of electric vehicles. For commercial vehicles, such as electric passenger buses and similar, dedicated DC charging stations may typically be provided for fast and reliable charging.

Various problems may arise in electric vehicle charging stations that may cause malfunctions and disruptions during charging. For example, power grid problems may cause the charging to be terminated, or one or more fuses of the charger may be blown. In such situations, an electric vehicle located at the charging station risk to remain at stand-still until the problem can be fixed. This is problematic for commercial vehicles in particular, since downtime causes disruptions in the commercial activities of the vehicle operator.

### DEFINITIONS

By an electric vehicle is intended a vehicle provided with a rechargeable electric energy storage system (ESS) for propulsion of the vehicle, which ESS is configured to be charged by an external power source, i.e. a power source located off-board the vehicle. The ESS may be configured to be charged using a plug, such as in a plug-in electric vehicle, but the ESS may additionally or alternatively be configured to be charged using e.g. a pantograph, and/or by using cordless inductive charging. The electric vehicle may be fully electric, or it may be a hybrid vehicle comprising an on-board power source other than the ESS, such as an internal combustion engine.

By charging of a vehicle, and/or charging of an ESS, is intended electrical charging of battery units and/or capacitors comprised within the ESS of the vehicle.

### SUMMARY

An object of the invention is to provide means for better preventing downtime of electric vehicles due to charging station problems.

According to a first aspect of the invention, the object is achieved by a control unit for controlling an electric vehicle comprising a rechargeable electric energy storage system, ESS, according to claim 1. The control unit comprises means for receiving information from a charging station configured for charging of the vehicle, and it is configured to:
- receive information relating to an operational fault of the charging station,
- based on the received information relating to the operational fault, determine an action suitable to be performed by the vehicle.

According to a second aspect of the invention, the object is achieved by a computer-implemented method for determining an action suitable to be performed by an electric vehicle comprising a rechargeable electric energy storage system according to the independent method claim. The computer-implemented method comprises:
- receiving information relating to an operational fault of a charging station configured for charging of the electric energy storage system,
- based on the received information relating to the operational fault, determining an action suitable to be performed by the vehicle.

Advantages and advantageous features of the method according to the second aspect are largely analogous to advantages and advantageous features of the control unit according to the first aspect. Thus, unless mentioned otherwise, all embodiments described below are equally applicable to the control unit and the method, although described as features of the control unit.

The proposed method and control unit enable taking an informed decision about how to proceed in case of a malfunction of the charging station, including e.g. grid problems affecting the power supply to the charging station, or a local problem within the charging station itself. By taking the information regarding the operational fault into account when deciding how to act, it is possible to reduce total downtime of the vehicle and to better plan how to operate the vehicle in case of charging problems.

The method may for example be carried out when the vehicle is located at the charging station, or when it is approaching the charging station.

The suitable action may be determined based on pre-defined criteria relating to the operational fault, such as to the type of operational fault and/or an estimated time to fix the operational fault. Also other information may be used in determining the suitable action to be performed, such as information about distance to and operational status of nearby charging stations, and/or information relating to a current status of the ESS within the vehicle and/or estimated energy need of the vehicle, such as an estimated or predicted operating range of the ESS given certain driving conditions.

Optionally, the control unit is configured to determine the action by selecting the action from a list of possible actions, wherein the action is selected based on at least one pre-defined criterion. A number of pre-defined possible actions may thus be provided, each being associated with a pre-defined criterion, or pre-defined criteria, relating to e.g. a maximum acceptable waiting time, a minimum acceptable charging power, etc. Optionally, the action is at least one of: travelling to another charging station, pausing at the charging station, terminating charging of the vehicle, continuing charging of the vehicle, and restarting charging of the vehicle. Continuing charging may be selected when the operational fault allows charging at a reduced charging current.

Optionally, the information relating to the operational fault contains a time indication for fixing the operational fault, and/or a type of the operational fault. The time indication may be an estimated time until the operational fault is fixed, and/or a time at which the operational fault is expected to be fixed. The type of operational fault may be a fault within the charger, such as a blown fuse, or it may be a power grid problem. It may be a fault that enables charging at a lower power, or a fault that completely disables charging until it is fixed.

The action to be performed may be decided by using at least one pre-defined criterion relating to the type of operational fault and/or to the time indication. Multiple criteria may be used so as to efficiently reduce downtime.

Optionally, the control unit is further configured to:
- obtain information relating to an amount of energy presently stored in the electric energy storage system, and/or information relating to an estimated energy need of the vehicle for taking at least one proposed action,
- use the obtained information relating to the stored amount of energy and/or the estimated energy need for determining the action suitable to be performed by the vehicle.

The information relating to the stored amount of energy may e.g. be the state of charge (SOC) or the state of energy (SOE) of the ESS. The information related to an estimated energy need of the vehicle may e.g. be information relating to a predicted remaining range of the vehicle, i.e. a predicted distance that the vehicle is able to travel with the current stored amount of energy, given an expected load. Such information is useful to take into account together with the information relating to the operational fault in order to improve the quality of the decision. For example, if the information received from the charging station indicates that the operational fault will not be fixed within a certain time, the decision to move on to another charging station may only be possible to take if the ESS is deemed to have a sufficient amount of energy stored for driving to the nearest operational charging station. The control unit may preferably be configured to combine the information regarding stored amount of energy, estimated energy need for different proposed actions, and the operational fault, to determine the action suitable to be performed by the vehicle.

Optionally, the control unit further comprises means for communicating information relating to the determined action and/or the information relating to the operational fault to a user of the vehicle. The user of the vehicle may be e.g. a driver of the vehicle, and/or a traffic manager or similar.

Optionally, the control unit further comprises means for controlling charging of the vehicle, and/or operation of the vehicle, in dependence on the determined action. The control unit is thereby configured to either directly or indirectly control the vehicle such that the determined action is implemented. For this purpose, the control unit may be configured to communicate with other control systems of the vehicle. For example, if the control unit is an off-board control unit, it may be configured to send a signal to an on-board control unit of the vehicle, which in turn controls charging and/or operation of the vehicle so as to carry out the determined action.

The control unit according to the first aspect may be located on-board the vehicle or off-board the vehicle. Analogously, the method according to the second aspect may be carried out on-board the vehicle or off-board the vehicle. When the control unit is located off-board the vehicle, or when the method is carried out off-board the vehicle, the determined action may be communicated to the vehicle, e.g. to an on-board control unit of the vehicle, via e.g. a wireless network.

According to a third aspect of the invention, a computer program comprising program code means for performing the method according to the second aspect when the program is run on a computer is provided.

According to a fourth aspect, a computer readable medium carrying a computer program comprising program code means for performing the method according to the second aspect when the program is run on a computer is provided.

According to a fifth aspect, an electric vehicle comprising the control unit according to the first aspect is provided. Advantages and advantageous features of the vehicle according to the fifth aspect are largely analogous to advantages and advantageous features of the control unit according to the first aspect.

The vehicle, which may be a heavy-duty vehicle such as a bus or a truck, may be a fully electric vehicle or a hybrid electric vehicle.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 schematically shows an electric vehicle at a charging station,
Fig. 2 is a flow chart illustrating a method according to an embodiment of the invention,
Fig. 3 is another flow chart illustrating an algorithm for taking a decision according to an example of the method, and
Fig. 4 schematically shows a control unit according to an embodiment of the invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

In the present detailed description, various embodiments of the method according to the present invention are mainly described with reference to an all-electric bus, comprising a propulsion system in the form of battery powered electric motors, which bus is configured for charging of the batteries using a pantograph. However, it should be noted that various embodiments of the described invention are equally applicable for a wide range of hybrid and electric vehicles. In particular, it should be noted that the charging of the batteries may be carried out using charging interfaces other than a pantograph, such as a plug, an inductive charging device, or any other available type of charging interface.

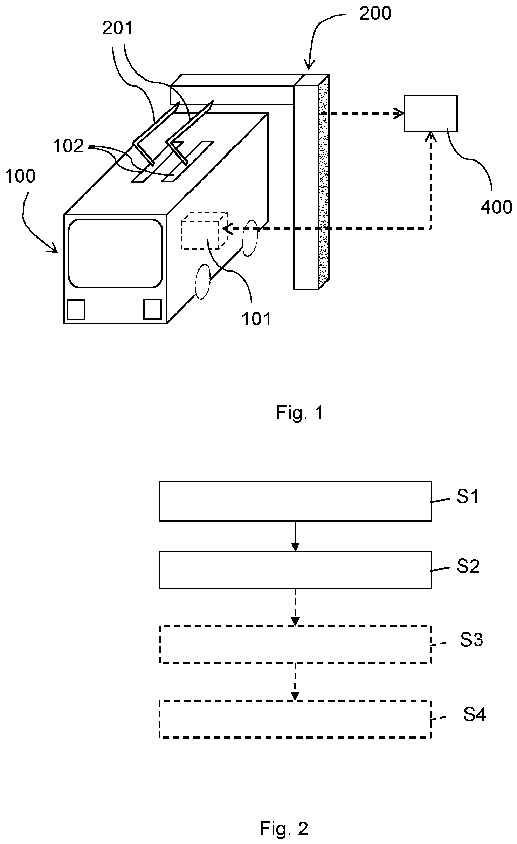

An electric vehicle 100 in the form of a fully electric bus is schematically shown in Fig. 1. The vehicle 100 is provided with a rechargeable electric energy storage system, ESS, 101, and a roof-mounted charging interface in the form of rails 102 for recharging of the ESS 101 at a charging station 200 provided with a charging interface in the form of a pantograph 201. The vehicle 100 is further equipped with at least one electric machine (not shown) for propulsion of the vehicle 100.

The ESS 101 comprises one or more battery packs, in turn comprising a plurality of battery cells. The battery cells are connected in series to provide an output direct current (DC) and a desired voltage level. Suitably, the battery cells are of lithium-ion type, but other types may also be used. The number of battery cells per battery pack may be in the range of 50 to 500 cells. It is to be noted that the ESS 101 may include a plurality of battery packs, connected in series or in parallel. The at least one electric machine forms a load, which when connected to the ESS 101 uses electric current provided from the battery pack(s). The rails 102 also form a load, which may be connected to an external power source via the pantograph 201 and charge the battery pack with electric energy.

The charging station 200 is configured to supply electric power provided via a power grid (not shown) to the vehicle 100 via the pantograph 201. For this purpose, although not illustrated in the drawings, the charging station 200 comprises power electronics and safety equipment, as well as a connection interface for connection to the power grid. The charging station 200 further comprises means for communicating with a control unit 400 for controlling charging and/or operation of the vehicle 100, either wirelessly or via a wired network. The control unit 400 may be located within the vehicle 100, or off-board the vehicle 100 as shown in fig. 1. The control unit 400 is in this case also configured to communicate with one or more on-board control units of the vehicle, such as a battery management unit of the ESS 101.

The control unit 400 is configured to carry out the method illustrated in the flow chart of fig. 2. The method comprises the steps of:
S1) Receiving information relating to an operational fault of the charging station 200 configured for charging of the ESS 101. This step may be carried out as the vehicle 100 is located at the charging station 200, or as it approaches the charging station. The information may e.g. relate to a type of operational fault, such as a power grid problem or a local fault within the charging station. The information may also comprise an indication regarding when the fault is expected to be fixed.
   This step may also, optionally, comprise obtaining or receiving information relating to an amount of energy presently stored in the ESS 101, an estimated energy need of the vehicle 100 for taking different actions, and/or receiving or obtaining information about other operational charging stations located nearby, topography and/or traffic information, etc. By operational charging stations are herein to be understood charging stations that are not affected by any operational fault.
S2) Based on the received information relating to the operational fault, determining an action suitable to be performed by the vehicle 100. In this step, the received information is assessed in the control unit 400 and a suitable action is determined based thereon, for example: travelling to another charging station, pausing at the charging station, terminating charging of the vehicle, continuing charging with reduced charging current, and restarting charging of the vehicle. The decision may be taken based solely on the received information about the operational fault, but it may also be taken in combination with other obtained or received information as described above.
   Optionally, the method may further comprise the steps of:
S3) Communicating information relating to the determined action and/or the information relating to the operational fault to a user of the vehicle, e.g. a driver or operator of the vehicle 100.
S4) Controlling charging of the vehicle 100, and/or operation of the vehicle 100, in dependence on the determined action. In this case, controlling operation of the vehicle 100 may for example comprise controlling the vehicle 100 to remain at the charging station 200 until further notice, or to drive to a predetermined location, such as a parking place or another charging station.

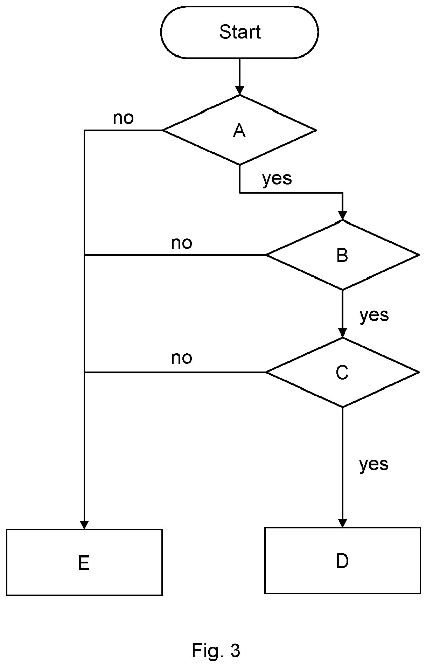

In an example of the method, the vehicle 100 arrives at the charging station 200 and charging is initiated. After a short time, the charging is interrupted due to an operational fault of the charging station 200. The charging station 200 communicates information containing the type of fault and the estimated time of fixing the fault to the control unit 400. The control unit 400 also receives information regarding the current amount of energy stored in the ESS 101 from the vehicle 100, various energy needs of the vehicle, and information about other operational charging stations in the vicinity of the vehicle 100. Based on the received information, the control unit 400 takes a decision on an action suitable to be performed by the vehicle 100. For example, an algorithm as illustrated in fig. 3 may be used for taking the decision:
A) Check whether the received information regarding the operational fault indicates that the operational fault is of a type that leads to interrupted charging and/or charging at a charging current below a certain threshold;
B) If yes was determined in step A), check if the estimated time to fix the operational fault is larger than a predetermined threshold;
C) If yes was determined in step B), check if the stored energy within the ESS is sufficient to travel to the nearest operational charging station;
D) If yes was determined in step C), travel to the nearest operational charging station, or informing a user to travel to the nearest operational charging station;
E) If no was determined in any one of steps A), B) and C), take the decision to stay at the charging station, or informing the user to stay at the charging station.

Of course, depending on the received information, other actions may be determined to be suitable instead of driving to the nearest operational charging station or staying at the present charging station, as discussed above.

The control functionality of the example embodiments may be implemented using existing computer processors, or by a special purpose computer processor for an appropriate system, incorporated for this or another purpose, or by a hardwire system. Embodiments within the scope of the present disclosure include program products comprising machine-readable medium for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general-purpose computer, special purpose computer, or special purpose processing machines to perform a certain function or group of functions.

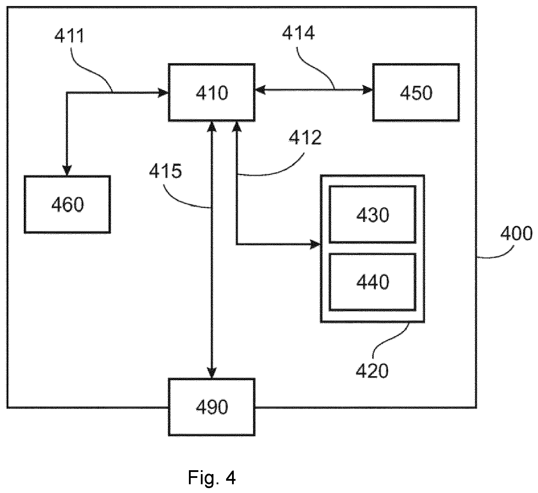

Fig. 4 shows a control unit 400 configured for carrying out the method according to embodiments of the invention, comprising a non-volatile memory 420, a data-processing unit 410 and a read and write memory 460. The memory 420 has a first memory part 430, in which a computer program for controlling the control unit 400 is stored. The computer program in the memory part 430 for controlling the control unit 400 can be an operating system.

The control unit 400 can be comprised in the control unit 400 described above with reference to fig. 1. The data-processing unit 410 can comprise, for example, a microcomputer. The memory 420 also has a second memory part 440, in which a program for performing the method according to the invention is stored. In an alternative embodiment, the program for performing the method is stored in a separate non-volatile storage medium 450 for data, such as, for example, a CD or an exchangeable semiconductor memory. The program can be stored in an executable form or in a compressed state. When it is stated below that the data-processing unit 410 runs a specific function, it should be clear that the data-processing unit 410 is running a specific part of the program stored in the memory 420 or a specific part of the program stored in the non-volatile storage medium 450. The data-processing unit 410 is tailored for communication with the non-volatile storage medium 450 through a data bus 414. The data-processing unit 410 is also tailored for communication with the memory 420 through a data bus 412. In addition, the data-processing unit 410 is tailored for communication with the memory 460 through a data bus 411. The data-processing unit 410 is also tailored for communication with a communication port 490 by the use of a data bus 415. The communication port 490 may be used for receiving information from the charging station 200 and for communicating with other control units controlling charging and/or operation of the vehicle 100.

It is to be understood that the present invention is not limited to the embodiments described above and illustrated in the drawings; rather, the skilled person will recognize that many changes and modifications may be made within the scope of the appended claims.

## Claims

1. A control unit (400) for controlling an electric vehicle (100) comprising a rechargeable electric energy storage system (101), the control unit (400) comprising means for receiving information from a charging station (200) configured for charging of the electric energy storage system,
***characterized in that***
the control unit is configured to:
- receive information relating to an operational fault of the charging station,
- based on the received information relating to the operational fault, determine an action suitable to be performed by the vehicle.

2. The control unit according to claim 1, wherein the control unit is configured to determine the action by selecting the action from a list of possible actions, wherein the action is selected based on at least one pre-defined criterion.

3. The control unit according to claim 1 or 2, wherein the action is at least one of: travelling to another charging station, pausing at the charging station, terminating charging of the vehicle, continuing charging of the vehicle, and restarting charging of the vehicle.

4. The control unit according to any one of the preceding claims, wherein the information relating to the operational fault contains a time indication for fixing the operational fault, and/or a type of the operational fault.

5. The control unit according to any one of the preceding claims, further being configured to:
- obtain information relating to an amount of energy presently stored in the electric energy storage system, and/or information relating to an estimated energy need of the vehicle for taking at least one proposed action,
- use the obtained information relating to the stored amount of energy and/or the estimated energy need for determining the action suitable to be performed by the vehicle.

6. The control unit according to any one of the preceding claims, further comprising means for communicating information relating to the determined action and/or the information relating to the operational fault to a user of the vehicle.

7. The control unit according to any one of the preceding claims, further comprising means for controlling charging of the vehicle, and/or operation of the vehicle, in dependence on the determined action.

8. A computer-implemented method for determining an action suitable to be performed by an electric vehicle (100) comprising a rechargeable electric energy storage system (101), the method comprising:
- receiving (S1) information relating to an operational fault of a charging station (200) configured for charging of the electric energy storage system (101),
- based on the received information relating to the operational fault, determining (S2) an action suitable to be performed by the vehicle.

9. The method according to claim 8, wherein the action is at least one of: travelling to another charging station, pausing at the charging station, terminating charging of the vehicle, continuing charging of the vehicle, and restarting charging of the vehicle.

10. The method according to claim 8 or 9, wherein the information relating to the operational fault contains a time indication for fixing the operational fault, and/or a type of the operational fault.

11. The method according to any one of claims 8-10, further comprising:
- obtaining information relating to an amount of energy presently stored in the electric energy storage system, and/or information relating to an estimated energy need of the vehicle for taking at least one proposed action,
- using the obtained information relating to the stored amount of energy and/or the estimated energy need for determining the action suitable to be performed by the vehicle.

12. The method according to any one of claims 8-11, further comprising:
- controlling (S4) charging of the vehicle, and/or operation of the vehicle, in dependence on the determined action.

13. A computer program comprising program code means for performing the method of any one of claims 8-12 when said program is run on a computer.

14. A computer readable medium carrying a computer program comprising program code means for performing the method of any of claims 8-12 when said program is run on a computer.

15. An electric vehicle comprising the control unit according to any one of claims 1-7.
